# EUROPEAN PATENT SPECIFICATION

(11) **EP 2 433 117 B1**
(45) Date of publication and mention of the grant of the patent: **26.10.2016**
(21) Application number: 10723509.5
(22) Date of filing: 14.05.2010
(51) Int. Cl.: G01N 21/64

(54) **METHOD AND APPARATUS FOR MEASURING FLUORESCENT MATERIAL IN A LIQUID**
VERFAHREN UND VORRICHTUNG ZUR MESSUNG VON FLUORESZIERENDEM MATERIAL IN EINER FLÜSSIGKEIT
PROCÉDÉ ET DISPOSITIF DE MESURE D'UNE MATIÈRE FLUORESCENTE DANS UN LIQUIDE

(30) Priority: 19.05.2009 GB 0908527
(43) Date of publication of application: 28.03.2012
(73) Proprietor: Advanced Sensors Limited, County Antrim BT38 8YF (GB)
(72) Inventor: THABETH, Khalid, Northern Ireland (GB); LUNNEY, Frank, Northern Ireland (GB); MIRZA, Turan, County Antrim (GB)
(74) Representative: Waller, Stephen
(86) International application number: PCT/EP2010/002976
(87) International publication number: WO 2010/133315

(56) References cited:
- EP-A1- 0 566 902
- US-A1- 2006 170 928
- US-B1- 7 501 285

## Description

This invention relates to an apparatus and method for measuring the amount of a fluorescent material in a liquid, in particular, to the measurement of oil in a liquid, particularly water.

There are many applications that require measurement of the amount or concentration of oil that is present in a liquid. For example, in pipes leading from oil production or refining facilities it may be required to measure the amount of oil that is present in the liquid (mainly water) flowing in the pipes. To this end it is known to provide an apparatus which measures the amount or concentration of oil that is present.

Many oils have a natural fluorescence and so, commonly, such measurement apparatus measure the amount or concentration of oil by the detection of fluorescence. Apparatus that detect and/or measure fluorescence are commonly referred to as fluorometers. A fluorometer usually includes a light source for causing excitation of a target substance and a detector for measuring the resultant fluorescence of the target substance at a predetermined wavelength.

EP 1991856 discloses a fluorometer for determining the amount of oil, or other fluorescent material, in a liquid, such as water. US 7,501,285 discloses a method and apparatus for determining the presence of heavy hydrocarbons in distillate streams and/or reformer streams including taking a sample, spectrally analysing the sample for at least one heavy hydrocarbon component and determining the concentration of the analysed heavy hydrocarbon component using an appropriate mathematical model.

According to a first aspect of the present invention there is provided an apparatus for measuring the amount of a fluorescent material in a liquid as claimed in claim 1.

Preferably the detector comprises a spectrometer.

The excitation source may comprise a light source of any suitable wavelength. More preferably said excitation source comprises a UV light source.

In one embodiment, the excitation source comprises a laser source, preferably a continuous wave laser source. In one embodiment the excitation source comprises a 3mW laser diode module of 405nm wavelength.

Preferably said processing means comprises a microprocessor.

In one embodiment, said apparatus includes a full scan UV to IR spectrometer for determining said response spectrum.

According to a further aspect of the present invention there is provided a method of measuring the amount of a fluorescent material in a liquid as claimed in claim 10.

An embodiment of the present invention will now be described, by way of example only.

In an embodiment of the present invention, an apparatus for measuring fluorescence in a liquid comprises an in-line fluorometer for incorporation, in use, into a pipe or conduit through which a liquid (e.g. water) including a fluorescent material (e.g. oil) flows. In the following description, the liquid is assumed to comprise water and the fluorescent material is assumed to comprise oil, although it will be understood that that the invention is not limited to these. For example, the target substance to be detected may be naturally fluorescent and/or may include an added fluorescent agent such as fluorescein.

The apparatus comprises a measurement chamber, which may be provided by a section of pipe or conduit that is separately formed from the pipe or conduit but is adapted for in-line connection therewith using any suitable conventional connectors (not shown). The apparatus may be of the type shown in EP 1991856 and therefore need not be described in more detail herein. The apparatus comprises an excitation source in the form of a 3mW laser diode module of 405nm wavelength and a detector for detecting the fluorescent response of a target material over a range of frequencies to produce a response spectrum for the material.

Preferably the detector comprises an inbuilt full scan UV to IR spectrometer for determining the fluorescent response of the target substance over a range of wavelengths, preferably over the full optical spectrum, typically between around 370nm and 2000nm.

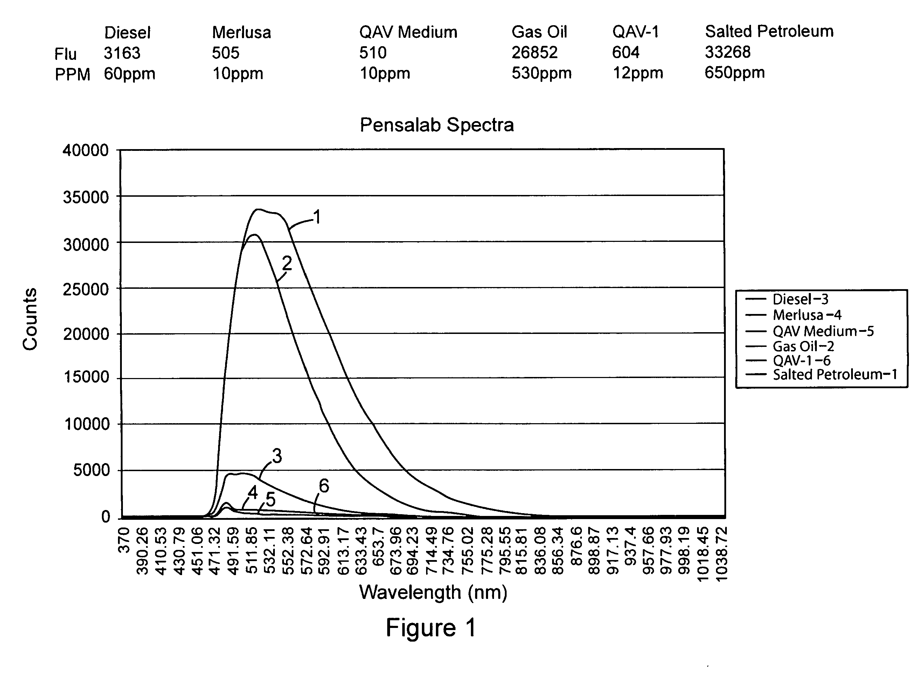

Figure 1 shows the optical spectra of sample oils all at 50 ppm concentration in water. As can be seen, there is a vast difference in the amplitude of measured fluorescence between different oils at the same concentration. Therefore a known fluorometer calibrated for one species of oil will produce inaccurate results when a different species of oil is present in the liquid. For example, when calibrated for a QAV medium, a concentration of 650ppm will be indicated with Salted Petroleum, even though only 10ppm is actually present, due to the much greater amplitude of fluorescence of Salted Petroleum compared to QAV.

The improved fluorometer in accordance with an embodiment of the invention measures the fluorescent response of a material in a liquid over a range of wavelengths (for example from approximately 400nm to 100nm or substantially over the entire optical spectrum) by means of the inbuilt full scan UV to IR spectrometer. The apparatus includes a microprocessor programmed to analyse the shape or profile of the measured spectrum and compare the measured curve to that of known spectra from calibrated samples by the inbuilt software to find a best match, thereby identifying the species of oil present.

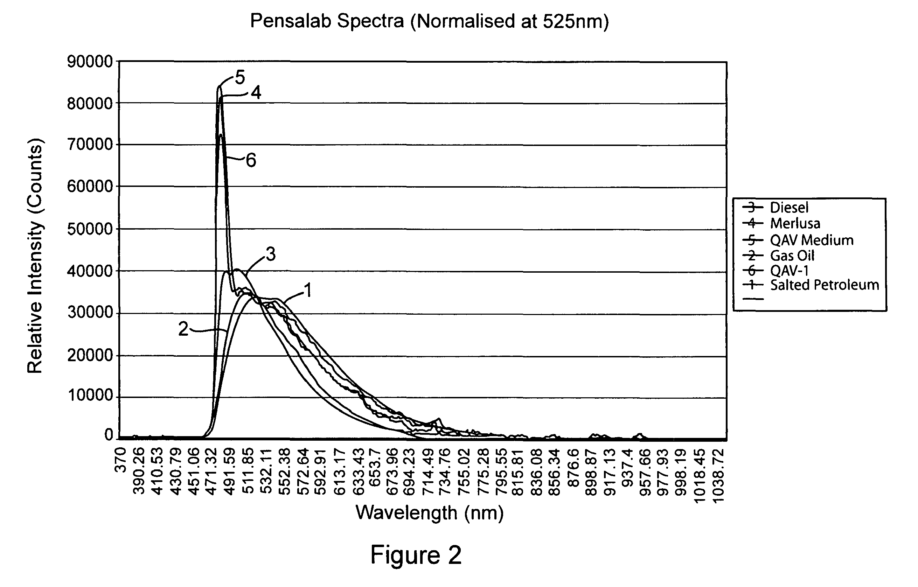

Figure 2 shows an example of the different response spectra for different species of oil. The software may apply a gain factor to the response spectra to adjust the amplitude of the response spectra to enable the profile of the response spectra to be analysed and compared to reference spectra of known materials to allow the identity of the material to be determined.

Based upon such material identification the software selects a predetermined calibration factor corresponding to the material identified, and provides a measure of the concentration of the material identified as a function of the amplitude of the fluorescent response at a predetermined wavelength and the calibration factor to provide an accurate measure of the concentration of the oil present. Thus the fluorometer in accordance with the present invention is capable of automatic identification of the oil species present and automatic calibration to provide an accurate determination of the concentration of said oil.

The amplitude of the fluorescent response of the material at said predetermined wavelength, used to determine the concentration of the material, may be determined from the inbuilt detector of the spectrometer or by means of a further detector filtered to detect fluorescence at said predetermined wavelength.

While the present invention has been described in relation to an apparatus for determining the identity and amount or concentration of oil in a liquid, it can equally be applied to the identification and measurement of concentration/amount of any other fluorescent material in a liquid.

The invention is not limited to the embodiment(s) described herein but can be amended or modified without departing from the scope of the present invention.

## Claims

1. An apparatus for measuring the amount of a fluorescent material in a liquid comprising an excitation source for exciting said fluorescent material, a detector for detecting the fluorescent response of the material over a range of wavelengths to determine a response spectrum, and processing means for identifying the material based upon its response spectrum, **characterised in that** said processing means is programmed to select a calibration factor based upon said identification of the material and to determine the amount of said material as a function of the amplitude of the fluorescent response at a predetermined wavelength and the selected calibration factor.

2. An apparatus as claimed in claim 1, wherein the detector comprises a spectrometer.

3. An apparatus as claimed in claim 2, wherein said spectrometer comprises a full scan UV to IR spectrometer.

4. An apparatus as claimed in any preceding claim, wherein the excitation source comprises a light source.

5. An apparatus as claimed in claim 4, wherein said excitation source comprises a UV light source.

6. An apparatus as claimed in any preceding claim, wherein the excitation source comprises a laser source.

7. An apparatus as claimed in claim 6, wherein the excitation source comprises a continuous wave laser source.

8. An apparatus as claimed in claim 6 or claim 7, wherein the excitation source comprises a 3mW laser diode module of 405nm wavelength.

9. An apparatus as claimed in any preceding claim, wherein said processing means comprises a microprocessor.

10. A method of measuring the amount of a fluorescent material in a liquid, said method comprising the steps of exciting said fluorescent material and measuring the fluorescent response of the material over a range of wavelengths to determine a response spectrum, identifying the material from said response spectrum, **characterised by** selecting a calibration factor based upon said identification of the material and determining the amount of said material as a function of the amplitude of the fluorescent response at a predetermined wavelength and the selected calibration factor.

## Patentansprüche

1. Vorrichtung zum Messen des Gehalts eines fluoreszierenden Materials in einer Flüssigkeit, umfassend eine Erregungsquelle zum Erregen des fluoreszierenden Materials, einen Detektor zum Erkennen der Fluoreszenzantwort des Materials über einen Bereich von Wellenlängen hinweg, um ein Antwortspektrum zu bestimmen, und ein Verarbeitungsmittel zum Identifizieren des Materials basierend auf seinem Antwortspektrum, **dadurch gekennzeichnet, dass** das Verarbeitungsmittel dazu programmiert ist, einen Kalibrationsfaktor basierend auf der Identifikation des Materials auszuwählen und den Gehalt des Materials als Funktion der Amplitude der Fluoreszenzantwort bei einer vorherbestimmten Wellenlänge und des ausgewählten Kalibrationsfaktors zu bestimmen.

2. Vorrichtung nach Anspruch 1, wobei der Detektor ein Spektrometer umfasst.

3. Vorrichtung nach Anspruch 2, wobei das Spektrometer ein Full-Scan-UV-IR-Spektrometer umfasst.

4. Vorrichtung nach einem der vorangehenden Ansprüche, wobei die Erregungsquelle eine Lichtquelle umfasst.

5. Vorrichtung nach Anspruch 4, wobei die Erregungsquelle eine UV-Lichtquelle umfasst.

6. Vorrichtung nach einem der vorangehenden Ansprüche, wobei die Erregungsquelle eine Laserquelle umfasst.

7. Vorrichtung nach Anspruch 6, wobei die Erregungsquelle eine Dauerstrich-Laserquelle umfasst.

8. Vorrichtung nach Anspruch 6 oder Anspruch 7, wobei die Erregungsquelle ein 3mW-Laserdiodenmodul mit einer Wellenlänge von 405 nm umfasst.

9. Vorrichtung nach einem der vorangehenden Ansprüche, wobei das Verarbeitungsmittel einen Mikroprozessor umfasst.

10. Verfahren zum Messen des Gehalts eines fluoreszierenden Materials in einer Flüssigkeit, wobei das Verfahren folgende Schritte umfasst: Erregen des fluoreszierenden Materials und Messen der Fluoreszenzantwort des Materials über einen Bereich von Wellenlängen hinweg, um ein Antwortspektrum zu bestimmen, Identifizieren des Materials anhand des Antwortspektrums, **gekennzeichnet durch** Auswählen eines Kalibrationsfaktors basierend auf der Identifikation des Materials und Bestimmen des Gehalts des Materials als Funktion der Amplitude der Fluoreszenzantwort bei einer vorherbestimmten Wellenlänge und des ausgewählten Kalibrationsfaktors.

## Revendications

1. Appareil de mesure de la quantité d'une substance fluorescente dans un liquide comprenant une source d'excitation pour exciter ladite substance fluorescente, un détecteur pour détecter la réponse fluorescente de la substance sur une plage de longueurs d'onde afin de déterminer un spectre de réponse, et un moyen de traitement pour identifier la substance en fonction de son spectre de réponse, **caractérisé en ce que** ledit moyen de traitement est programmé pour sélectionner un facteur de calibrage basé sur ladite identification de la substance et déterminer la quantité de ladite substance en fonction de l'amplitude de la réponse fluorescente à une longueur d'onde prédéterminée et du facteur de calibrage sélectionné.

2. Appareil selon la revendication 1, dans lequel le détecteur comprend un spectromètre.

3. Appareil selon la revendication 2, dans lequel ledit spectromètre comprend un spectromètre à balayage total UV à IR.

4. Appareil selon l'une quelconque des revendications précédentes, dans lequel la source d'excitation comprend une source lumineuse.

5. Appareil selon la revendication 4, dans lequel ladite source d'excitation comprend une source lumineuse à UV.

6. Appareil selon l'une quelconque des revendications précédentes, dans lequel la source d'excitation comprend une source laser.

7. Appareil selon la revendication 6, dans lequel la source d'excitation comprend une source laser à ondes entretenues.

8. Appareil selon la revendication 6 ou la revendication 7, dans lequel la source d'excitation comprend un module de diode laser de 3mW d'une longueur d'onde de 405 nm.

9. Appareil selon l'une quelconque des revendications précédentes, dans lequel ledit moyen de traitement comprend un microprocesseur.

10. Procédé de mesure de la quantité d'une substance fluorescente dans un liquide, ledit procédé comprenant les étapes consistant en l'excitation de ladite substance fluorescente et la mesure de la réponse fluorescente de la substance sur une plage de longueurs d'onde afin de déterminer un spectre de réponse, l'identification de la substance à partir de son spectre de réponse, **caractérisé par** la sélection d'un facteur de calibrage basé sur ladite identification de la substance et la détermination de la quantité de ladite substance en fonction de l'amplitude de la réponse fluorescente à une longueur d'onde prédéterminée et du facteur de calibrage sélectionné.
